# EUROPEAN PATENT APPLICATION

(11) **EP 1 971 141 A2**
(43) Date of publication of application: **17.09.2008**
(21) Application number: 07021429.1
(22) Date of filing: 02.11.2007
(51) Int. Cl.: H04N 5/44, H04N 5/76

(54) **Method of selecting broadcast channels and a broadcast receiving terminal**

(30) Priority: 12.03.2007 KR 20070024058
(71) Applicant: LG Electronics Inc., Yongdungpo-gu Seoul 150-010 (KR)
(72) Inventor: Woo, Sung Ho, Seoul 153-801 (KR); Kwak, Jae Do, Seoul 153-801 (KR)
(74) Representative: Katérle, Axel

(57) **Abstract**

A method for displaying broadcast content in a portable electronic device includes identifying a priority channel to be displayed on a display associated with the electronic device, indicating that the priority channel is no longer available, and displaying content associated with a current channel which differs from the priority channel. The method further includes indicating that the priority channel is available for displaying on the display, and switching a displayed channel of the display from the current channel to the priority channel.

## Description

This application claims the benefit of the Korean Patent Application No. 10-2007-0024058, filed on March 12, 2007, which is hereby incorporated by reference as if fully set forth herein.

### Field of the Invention

The present invention generally relates to wireless communications, and in particular, to a method for displaying broadcast content in a portable electronic device.

### Discussion of the Related Art

Generally, the developments of information communication technologies have caused rapid transitions of information and communication environments. Mobile terminals are regarded as a necessity in a modem society and are used throughout the world. Recently, as broadcast receiving functions play increasingly more important roles, various broadcast programs are transmitted via assorted broadcast channels. However, some users find it difficult deciding which broadcast channel to view and look forward to new techniques for viewing such channels.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a method for displaying broadcast content in a portable electronic device includes identifying a priority channel to be displayed on a display associated with the electronic device, indicating that the priority channel is no longer available, and displaying content associated with a current channel which differs from the priority channel. The method further includes indicating that the priority channel is available for displaying on the display, and switching a displayed channel of the display from the current channel to the priority channel.

In a feature, the method further includes switching the displayed channel responsive to user input.

In another feature, the method further includes switching the displayed channel automatically without direct user input.

In yet another feature, the method further includes identifying that the broadcast signal associated with the priority channel falls below an acceptable threshold, and causing the indicating that the priority channel is no longer available responsive to the identifying that the priority channel falls below the acceptable threshold.

In still yet another feature, the method further includes identifying that the broadcast signal associated with the priority channel falls below an acceptable threshold, and automatically displaying the content associated with the current channel responsive to the identifying that the priority channel falls below the acceptable threshold.

In accordance with an alternative embodiment, a method for displaying broadcast content in a portable electronic device includes identifying a specific event which is associated with broadcast content of a priority channel, causing content associated with a current channel to be displayed on a display of the electronic device, causing displaying of an indicator indicating that the priority channel is available for displaying on the display responsive to an occurrence of the specific event, and causing switching of a displayed channel of the display from the current channel to the priority channel.

In accordance with yet another alternative embodiment, a method for recording broadcast content in a portable electronic device includes identifying a priority channel to be recorded on a recording medium associated with the electronic device, displaying content associated with a current channel which differs from the priority channel, indicating that the priority channel is available for recording, and recording the priority channel on the recording medium.

In accordance with still yet another alternative embodiment, a method for recording broadcast content in a portable electronic device includes identifying a specific event which is associated with broadcast content of a priority channel, displaying content associated with a current channel on a display of the electronic device, indicating that the priority channel is available for recording responsive to an occurrence of the specific event, and recording the priority channel on the recording medium.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.

Fig. 1 is a block diagram depicting various components of a mobile terminal according to an embodiment of the present invention.

Fig. 2 is a flowchart depicting a method for selecting a priority channel return.

Fig. 3 depicts various stages of a display during priority channel return.

Fig. 4 depicts various stages of a display in which return to a priority channel is performed based upon a specific event.

Fig. 5 is a flowchart depicting a method for recording a broadcast channel.

Fig. 6 depicts various stages of a display which may occur during the recording of a broadcast channel.

Fig. 7 depicts various stages of a display associated with a mobile terminal in which a recording of a broadcast channel is performed based upon a specific event.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

Various embodiments will be described in conjunction with a mobile terminal. However, such teachings apply also to other types of electronic devices. Examples of such devices include portable devices, game players, digital broadcast receiving terminals, MP3 players, personal digital assistants (PDAs), portable multimedia players (PMPs), and the like.

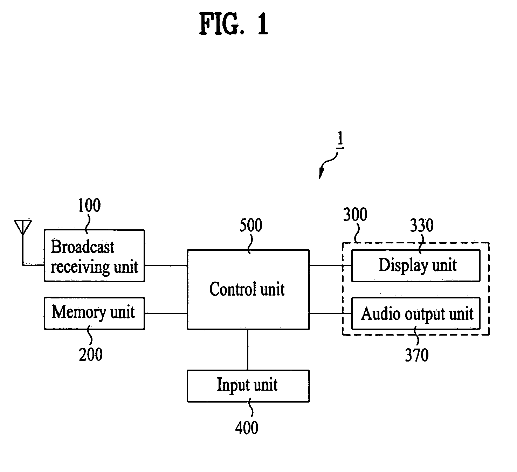

Fig. 1 is a block diagram depicting various components of a mobile terminal according to an embodiment of the present invention. It is understood that mobile terminal 1 is typically configured with components other than those depicted in Fig. 1 to achieve desired operations. However, such components are not necessary for understanding embodiments of the invention and have therefore been omitted for clarity. If desired one or more components may be combined into a single component or such components may be individually separated into two or more separate components.

Broadcast receiving unit 100 is typically configured to simultaneously receive at least two broadcast channels via single or multiple tuners. In an embodiment, the broadcast receiving unit is configured to operate with Internet protocol (IP) broadcasting standards, such as the European DVB-H.

During operation, receiving unit 100 receives a broadcast program guide which typically includes channel program information carried via a broadcasting network to a viewer from a broadcasting station. A broadcast program guide refers to information relating to program information. In general, the broadcast program guide includes an electronic program guide (EPG) according to the D-TV broadcasting standard, digital multimedia broadcasting (DMB) standard, and the like, or an electronic service guide (ESG) according to the digital video broadcasting (DVB) standard or the like. In an alternative example, the channel program information may be received by mobile terminal 1 via other schemes (e.g., via an Internet access interface unit configured to receive Internet-based communications).

Memory unit 200 is typically configured to store various kinds of software and/or data required to support operation of the mobile terminal. If desired, broadcasts received via broadcast receiving unit 100 may also be recorded or otherwise stored in the memory unit.

Broadcast output unit 300 may be used to output the broadcast received via broadcast receiving unit 100. As shown in Fig. 1, the broadcast output unit includes display unit 330 and audio output unit 370. Display unit 330 displays various images and other information to a user. Examples include images relating to real-time operation of the mobile terminal 10 and images rendered according to various operations of the mobile terminal. In a particular example, the display outputs images of a broadcast received via broadcast receiving unit 100. In an embodiment, display unit 330 is configured as a touchscreen, thus operating as an input unit functioning responsive to user contact with the touchscreen.

Audio output unit 370 may be configured to output audio as required by the mobile terminal. Examples of such audio include real-time operation of the mobile terminal and audio generated responsive to operation of various functions and features of the mobile terminal. In a particular embodiment, the audio output unit outputs audio associated with a broadcast received via broadcast receiving unit 100.

Input unit 400 enables a terminal user to input various commands or other information. The input unit may be implemented using various types or combinations of devices such as a keypad, touchpad, touchscreen, touchkey, and the like. Control unit 500 may be configured to control the various components of mobile terminal 1.

### Compromised reception environment

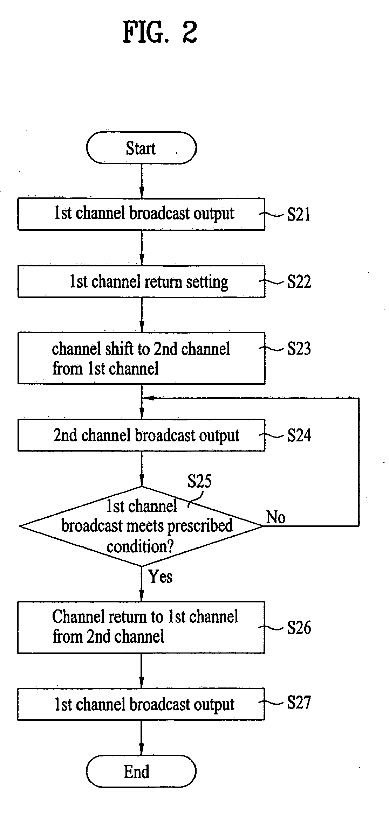

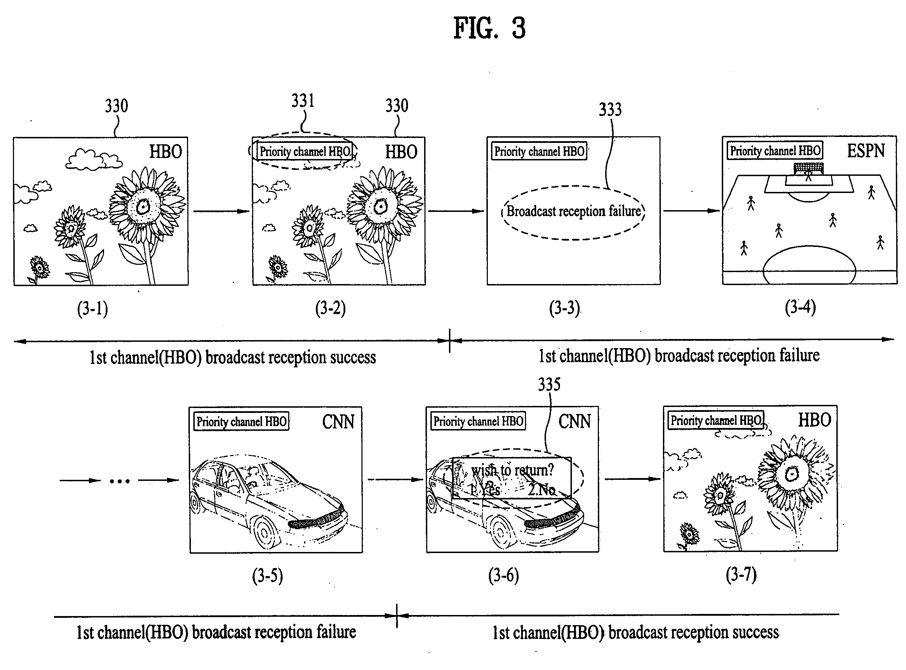

A method of displaying broadcast channel information according to an embodiment of the present invention will now be described with regard to Figs. 2 and 3. Fig. 2 is a flowchart depicting a method for selecting a priority channel return, and Fig. 3 depicts various stages of a display during priority channel return. By way of nonlimiting example, these figures will be described in association with various components of mobile terminal 1.

In the following description, a broadcast received via an n^{th} channel is abbreviated 'n^{th} channel broadcast', where n = 1, 2, 3, ...N. Block S21 includes displaying a broadcast associated with a first channel. An example of this operation is depicted at stage 3-1 (Fig. 3), such that a broadcast is output on screen 330 via a first channel (e.g., a "HBO" program).

Block S22 includes setting a first channel return. This return setting may be set by a user to indicate a particular channel broadcast which is desired to be viewed. This channel may be referred to as a priority channel or a return channel. Stage 3-2 provides an example of this aspect such that the HBO channel is set as the priority channel, as indicated by optional indicator 331. The indicator may be displayed at any desired location.

Block S23 includes changing the displayed channel from the first channel to a second channel. A scenario in which this may occur includes mobile terminal 1 entering a compromised reception environment during which the signal associated with the first channel falls below a certain threshold. In this scenario, the first broadcast is unavailable for display. As indicated at stage 3-3, the mobile terminal may display indicator 333 to indicate the broadcast reception failure of the first channel.

Block S24 includes displaying the broadcast associated with the second channel. Stage 3-4 provides an example of this feature such that the mobile terminal 1 displays a second broadcast channel (e.g., ESPN). Such a scenario may occur when reception at the mobile terminal of the second channel is greater than the reception strength of the first channel.

In an embodiment, the operations of blocks S23 and S24 may be automatic such that if reception quality of the first broadcast channel falls below a predetermined level, the display may be switched to the second broadcast channel.

If desired, the user may further switch channels to a desired channel. Stage 3-5 depicts an example in which the user switches to a third channel (e.g., CNN). It is understood that the mobile terminal will typically continue to monitor reception quality on the first broadcast channel on a periodic or ongoing basis.

At decision block S25, if the first broadcast channel does not meet a desired level of reception quality, then monitoring of the first broadcast channel continues. On the other hand, if the reception quality meets the desired level of reception quality (or other condition), then control flows to block S26. At this point, the mobile terminal may optionally display indicator 335 requesting input from the user in order to return to the first broadcast channel (stage 3-6).

Block S26 recites returning to the first broadcast channel from the second broadcast channel. This operation typically occurs when the terminal user selects to return to the first broadcast channel, which is set as the return channel, such that the mobile terminal returns to the first broadcast channel. An example of this feature is shown in stage 3-7. Block S27 includes displaying the broadcast associated with the first broadcast channel.

If desired, operations associated with blocks S25 and S26 may be automatic to the extent that user interaction with the mobile terminal is not required. It is not a requirement that the mobile terminal return to both the audio and the video associated with the first broadcast channel. For instance, the terminal may be configured to return to the first broadcast channel so that the video of the first broadcast channel is displayed while maintaining the audio of the second broadcast channel.

### Specific Event

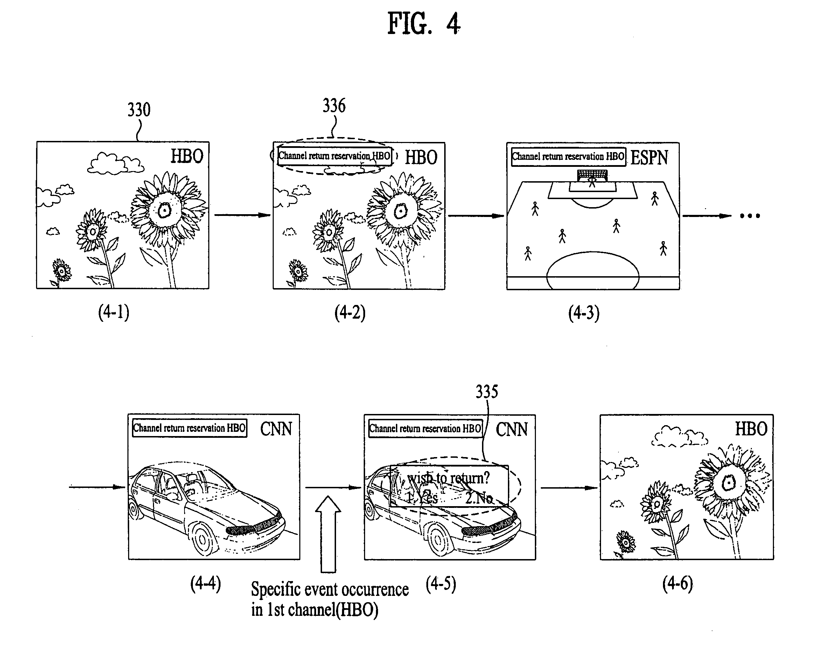

Fig. 4 depicts various stages of a display in which return to a priority channel is performed based upon a specific event. At stage 4-1, a broadcast associated with a first broadcast channel (e.g., HBO) is output on screen 330 of the mobile terminal. At some point, the user may enter a channel return setting which is a channel to which the display is to switch upon the occurrence of a specific event. In an embodiment, this event may be user defined. Stage 4-2 depicts an example in which indicator 336 indicates that the channel return reservation is set to the HBO broadcast channel.

A specific event refers to any identifiable event or time period. Specific and nonlimiting examples of specific events include an appearance or disappearance of a particular character (e.g. an actor), a particular scene, a particular location, beginning or ending of a program, beginning or ending of a particular program, beginning or ending of an advertisement in the broadcast, elapsed period of time, and the like. In an embodiment, the specific event includes information which is available from compressed video (e.g., MPEG-4), and information available from a broadcast program guide, combinations thereof, and the like.

During operation, a terminal user views a channel that is different from the reserved channel. In particular, stage 4-3 depicts the displaying of the ESPN broadcast channel. A further example includes the user viewing still another broadcast channel (e.g., the CNN broadcast channel of stage 4-4).

As indicated by Fig. 4, the occurrence of a specific event, or combination of events, has been detected. At this point, as indicated in stage 4-5, the mobile terminal may optionally display indicator 335 requesting input from the user in order to return to the reserved channel (e.g., the HBO broadcast channel depicted in stage 4-1).

The user may select to return to the reserved broadcast channel from the current broadcast channel. An example of this feature is shown in stage 4-6. If desired, the switching of a broadcast channel to the return or priority channel may be manual (e.g., stage 4-5) or automatic to the extent that user interaction with the mobile terminal is not required to switch channels. It is not a requirement that the mobile terminal return to both the audio and the video associated with the first broadcast channel. For instance, the terminal may be configured to return to the first broadcast channel so that the video of the first broadcast channel is displayed while maintaining the audio of the second broadcast channel.

### Priority recording channel

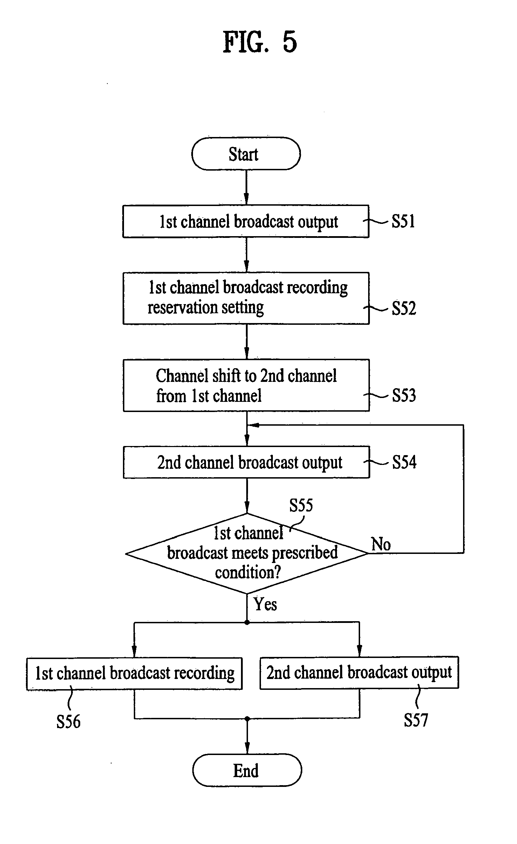

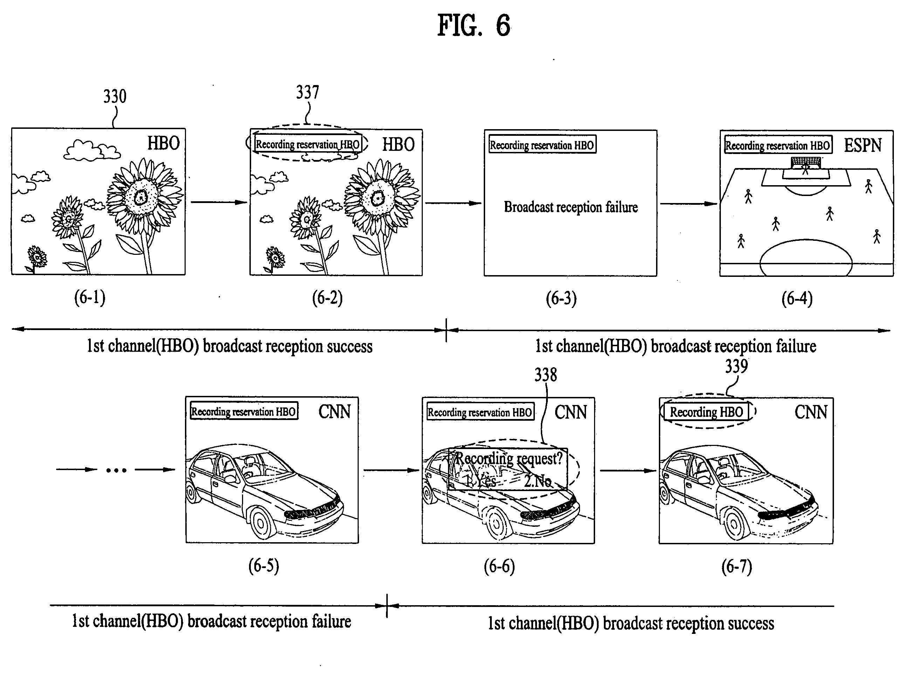

The embodiment of Figs. 5 and 6 is similar in several respects to the embodiment of Figs. 2 and 3. One difference is that the embodiment of Figs. 5 and 6 relates to recording an identified priority channel, whereas the embodiment of Figs. 2 and 3 relates to returning to the identified priority channel.

Fig. 5 is a flowchart depicting a method for recording a broadcast channel, and Fig. 6 depicts various stages of a display which may occur during the recording of a broadcast channel. In Fig. 5, blocks S51, S53, S54, and S55 may be implemented using techniques which are similar to that depicted in blocks S21, S23, S24, and S25, respectively, of Fig. 2. Likewise, in Fig. 6, stages 6-1, 6-3, 6-4, and 6-5 may be implemented in a manner similar to stages 3-1, 3-3, 3-4, and 3-5, respectively, of Fig. 3. Accordingly, description of such blocks and stages will be omitted for clarity.

Block S52 includes setting a first channel for recording. This recording setting may be set by a user to indicate a particular channel broadcast which is desired to be recorded. This channel may be referred to as a priority channel or a recording channel. Stage 6-2 provides an example of this aspect such that the HBO channel is set as the priority channel, as indicated by indicator 337. The icon may be displayed at any desired location.

Referring now to decision block S55, if the first broadcast channel does not meet a desired level of reception quality, then monitoring of the first broadcast channel continues. On the other hand, if the reception quality meets the desired level of reception quality, then the user may be presented with an option. For instance, the mobile terminal may optionally display indicator 338 requesting input from the user in order to record the first broadcast channel (stage 6-6). As a specific example, the user may be presented an option to record the priority recording channel (block S56), or not record the priority channel and continue viewing the current channel (block S57).

If the user elects to record the priority recording channel, then the current broadcast channel may be displayed while the priority recording channel is simultaneously recorded (stage 6-7). If desired, recording indicator 339 may be used to indicate such recording. An alternative includes switching the currently viewed channel to the priority recording channel. If desired, operations associated with blocks S55, S56, and S57 may be automatic to the extent that user interaction with the mobile terminal is not required to achieve the desired recording of the priority channel.

### Recording based upon a specific event

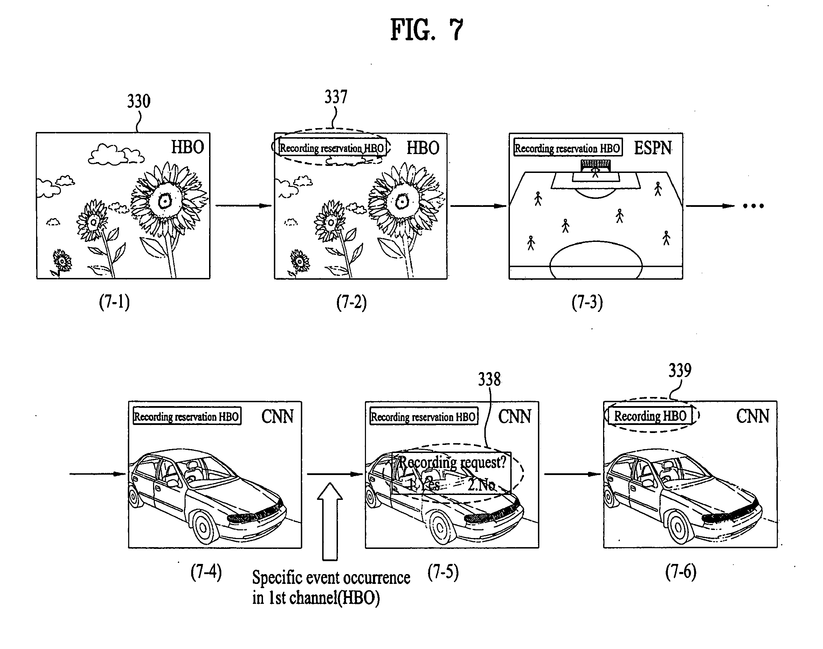

Fig. 7 depicts various stages of a display associated with a mobile terminal in which a recording of a broadcast channel is performed based upon a specific event. At stage 7-1, a broadcast associated with a first broadcast channel (e.g., HBO) is output on screen 330 of the mobile terminal. At some point, the user may enter a channel recording setting which is a channel that is to be recorded upon the occurrence of a specific event. In an embodiment, this event may be user defined. Various examples of specific events have previously been described. Stage 7-2 depicts an optional indicator 337 which indicates that the channel recording reservation is set to the HBO broadcast channel.

During operation, a terminal user views a channel that is different from the reserved channel. In particular, stage 7-3 depicts the displaying of the ESPN broadcast channel. A further example includes the user viewing still another broadcast channel (e.g., CNN broadcast channel of stage 7-4).

As indicated by Fig. 7, the occurrence of a specific event, or combination of events, has been detected. At this point, the mobile terminal may optionally display indicator 338 requesting input from the user as to recording the previously identified recording channel (e.g., the HBO broadcast channel depicted in stage 7-1).

The user may select to record the recording channel, an example of which is shown in stage 7-5. If the user elects to record the priority recording channel, then the current broadcast channel may be displayed while the priority recording channel is simultaneously recorded at stage 7-6. If desired, recording indicator 339 may be used to indicate such recording. An alternative includes switching the currently viewed channel to the priority recording channel. If desired, various operations may be automatic to the extent that user interaction with the mobile terminal is not required to achieve the desired recording of the priority recording channel.

Although the present invention may be implemented using the exemplary series of operations described herein, additional or fewer operations may be performed. Moreover, it is to be understood that the order of operations shown and described is merely exemplary and that no single order of operation is required, and that the various embodiments may also be combined to form further implementations.

The foregoing embodiments and advantages are merely exemplary and are not to be construed as limiting the present invention. The present teaching can be readily applied to other types of apparatuses and processes. The description of the present invention is intended to be illustrative, and not to limit the scope of the claims. Many alternatives, modifications, and variations will be apparent to those skilled in the art.

## Claims

1. A method for displaying broadcast content in a portable electronic device, the method comprising:
identifying a priority channel to be displayed on a display associated with the electronic device;
indicating that the priority channel is no longer available;
displaying content associated with a current channel which differs from the priority channel;
indicating that the priority channel is available for displaying on the display; and
switching a displayed channel of the display from the current channel to the priority channel.

2. The method according to claim 1, further comprising:
switching the displayed channel responsive to user input.

3. The method according to claim 1, further comprising:
switching the displayed channel automatically without direct user input.

4. The method according to claim 1, further comprising:
identifying that the broadcast signal associated with the priority channel falls below an acceptable threshold; and
causing the indicating that the priority channel is no longer available responsive to the identifying that the priority channel falls below the acceptable threshold.

5. The method according to claim 1, further comprising:
identifying that the broadcast signal associated with the priority channel falls below an acceptable threshold; and
automatically displaying the content associated with the current channel responsive to the identifying that the priority channel falls below the acceptable threshold.

6. A portable electronic device comprising:
a display configured to display a priority channel;
a controller configured to control displaying of broadcast content by:
identifying a priority channel to be displayed on the display;
causing display of an indicator indicating that the priority channel is no longer available;
causing content associated with a current channel which differs from the priority channel to be displayed on the display;
causing display of an indicator indicating that the priority channel is available for displaying on the display; and
switching a displayed channel of the display from the current channel to the priority channel.

7. A method for displaying broadcast content in a portable electronic device, the method comprising:
identifying a specific event which is associated with broadcast content of a priority channel;
displaying content associated with a current channel on a display of the electronic device;
displaying an indicator indicating that the priority channel is available for displaying responsive to an occurrence of the specific event; and
switching of a displayed channel of the display from the current channel to the priority channel.

8. The method according to claim 7, wherein the identifying the specific event comprises:
identifying presence of a particular character in the broadcast content.

9. The method according to claim 7, wherein the identifying the specific event comprises:
identifying presence of a particular scene in the broadcast content.

10. The method according to claim 7, wherein the identifying the specific event comprises:
identifying a beginning of a program of the broadcast content.

11. The method according to claim 7, wherein the identifying the specific event comprises:
identifying an ending of an advertisement in the broadcast content.

12. The method according to claim 7, wherein the identifying the specific event comprises:
identifying an elapsed period of time.

13. A portable electronic device comprising:
a display configured to display a priority channel;
a controller configured to control displaying of broadcast content by:
identifying a specific event which is associated with broadcast content of a priority channel;
causing content associated with a current channel to be displayed on a display of the electronic device;
causing displaying of an indicator indicating that the priority channel is available for displaying on the display responsive to an occurrence of the specific event; and
causing switching a displayed channel of the display from the current channel to the priority channel.

14. A method for recording broadcast content in a portable electronic device, the method comprising:
identifying a priority channel to be recorded on a recording medium associated with the electronic device;
displaying content associated with a current channel which differs from the priority channel;
indicating that the priority channel is available for recording; and
recording the priority channel on the recording medium.

15. The method according to claim 14, further comprising:
indicating that the priority channel is not available for recording.

16. A method for recording broadcast content in a portable electronic device, the method comprising:
identifying a specific event which is associated with broadcast content of a priority channel;
displaying content associated with a current channel on a display of the electronic device;
indicating that the priority channel is available for recording responsive to an occurrence of the specific event; and
recording the priority channel on the recording medium.

17. The method according to claim 16, wherein the identifying the specific event comprises:
identifying presence of a particular character in the broadcast content.

18. The method according to claim 16, wherein the identifying the specific event comprises:
identifying presence of a particular scene in the broadcast content.

19. The method according to claim 16, wherein the identifying the specific event comprises:
identifying a beginning of a program of the broadcast content.

20. The method according to claim 16, wherein the identifying the specific event comprises:
identifying an ending of an advertisement in the broadcast content.

21. The method according to claim 16, wherein the identifying the specific event comprises:
identifying an elapsed period of time.
